# EUROPEAN PATENT APPLICATION

(11) **EP 4 336 958 A1**
(43) Date of publication of application: **13.03.2024**
(21) Application number: 23193520.6
(22) Date of filing: 25.08.2023
(51) Int. Cl.: H04W 84/12, H04L 69/14, H04W 28/082

(54) **COMMUNICATION APPARATUS AND CONTROL METHOD OF THE SAME**

(30) Priority: 08.09.2022 JP 2022143102
(71) Applicant: CANON KABUSHIKI KAISHA, Tokyo 146-8501 (JP)
(72) Inventor: YOSHIKAWA, Yuki, Tokyo, 146-8501 (JP)
(74) Representative: Canon Europe Limited

(57) **Abstract**

A communication apparatus (101) capable of multilink communication complying with IEEE 802.11 standard series, comprises determination means (202) for determining, from a plurality of wireless links (103, 104) established with another communication apparatus (102), a primary link complying with the IEEE 802.11 standard series, which is a link capable of transmission of a predetermined type of a radio frame. The determination means determines the primary link based on at least one of a first condition concerning a plurality of frequency channels corresponding to the plurality of wireless links, and a second condition concerning a radio wave status in each of the plurality of wireless links.

## Description

### BACKGROUND OF THE INVENTION

### Field of the Invention

The present invention relates to access control in wireless communication.

### Description of the Related Art

As the main communication standard of a wireless Local Area Network (LAN), the Institute of Electrical and Electronics Engineers (IEEE) 802.11 standard series are known. The IEEE 802.11 standard series include IEEE 802.11a/b/g/n/ac/ax standards. In IEEE 802.11ax, a technique called Orthogonal Frequency Division Multiple Access (OFDMA) is used to improve the communication rate, thereby improving the communication rate under congestion in addition to implementing the high peak throughput (Japanese Patent Laid-Open No. 2018-50133). As a succeeding standard that aims at further improving the throughput, the frequency use efficiency, and the latency of communication, defining the IEEE 802.11be standard (to be referred to as the 11be standard hereinafter) is presently in progress.

In the 11be standard, multilink communication has been examined, in which one Access Point (AP) apparatus establishes, with one Station (STA) apparatus, a plurality of wireless links using a plurality of frequency channels to execute communication. The AP apparatus and the STA apparatus supporting multilink communication are called an AP_MLD (multilink device) and a non-AP_MLD, respectively. Here, the non-AP_MLD may be called a STA_MLD.

In multilink communication, a Non-Simultaneous Transmission Reception (NSTR) operation considering constraints on the hardware of a wireless communication apparatus has also been examined. In the NSTR operation, a transmission operation in one link in a predetermined link pair and a reception operation in the other link cannot be performed simultaneously. The AP and the STA that perform the NSTR operation are called an NSTR_AP_MLD and an NSTR_STA_MLD, respectively. Particularly, when a device (IoT apparatus or the like) which operates with, for example, a battery power supply operates as the AP_MLD, the device is called an "NSTR_mobile_AP_MLD".

For the NSTR_mobile_AP_MLD, it is necessary to select, as the primary link, one link included in the NSTR link pair in the NSTR operation. Predetermined types of radio frames such as a Beacon frame, a Probe _Response frame, and a group designation data frame are transmitted only in the primary link. In addition, in data transmission, data transmission in a non-primary link can be performed only at a timing capable of data transmission in the primary link. Since the constraints as described above exist, in order to perform efficient communication in multilink communication, it is important to select the more appropriate link as the primary link.

### SUMMARY OF THE INVENTION

The present invention in its first aspect provides a communication apparatus as specified in claims 1 to 8.

The present invention in its second aspect provides a control method as specified in claim 9. The present invention in its third aspect provides a computer program as specified in claim 10. The present invention in its fourth aspect provides a computer-readable storage medium as specified in claim 11.

The present invention enables more efficient communication in multilink communication.

Further features of the present invention will become apparent from the following description of embodiments (with reference to the attached drawings).

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a view showing the overall configuration of a system;
Fig. 2 is a block diagram showing the hardware arrangement of each of an AP_MLD and a non-AP_MLD;
Fig. 3 is a block diagram showing the functional arrangement of each of the AP_MLD and the non-AP_MLD;
Figs. 4A and 4B are a flowchart of a primary link determination process;
Fig. 5 is a sequence chart between an AP and a STA in the first embodiment;
Fig. 6 is a flowchart of a primary link change process; and
Fig. 7 is a sequence chart between an AP and a STA in the second embodiment.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (First Embodiment)

As the first embodiment of a communication apparatus according to the present invention, an AP_MLD 101, which is a communication apparatus complying with the IEEE 802.11be (D2.0) standard, will be taken as an example and described below.

### <System Configuration and Apparatus Arrangement>

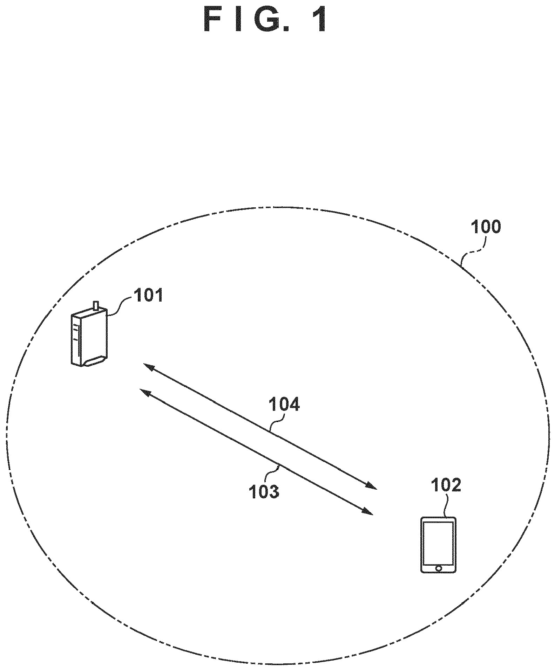

Fig. 1 is a view showing the overall configuration of a system. In Fig. 1, for the sake of descriptive convenience, one access point multilink device (AP_MLD) 101 and one non-access point multilink device (non-AP_MLD) 102 are shown. The network range formed by the AP_MLD 101 is indicated by a region 100. The non-AP_MLD 102 can transmit/receive signals transmitted/received by the AP_MLD 101.

The non-AP_MLD 102 is a communication apparatus that participates in the network formed by the AP_MLD 101. The AP_MLD 101 and the non-AP_MLD 102 can execute wireless communication complying with the 11be standard (which is also called the EHT standard). EHT is an abbreviation for Extremely High Throughput.

Each communication apparatus can execute communication in the frequency bands (2.4-GHz band, 5-GHz band, and 6-GHz band) supported by the 11be standard. However, another frequency band such as, for example, the 60-GHz band may further be used. Each of the AP_MLD 101 and the non-AP_MLD 102 can execute communication using, as the bandwidths to be used, the 20-GHz bandwidth, the 40-MHz bandwidth, the 80-MHz bandwidth, the 160-MHz bandwidth, and the 320-MHz bandwidth. However, another bandwidth such as, for example, the 240-MHz bandwidth or 4-MHz bandwidth may be used.

Note that each of the AP_MLD 101 and the non-AP_MLD 102 is assumed to comply with the 11be standard. In addition to this, each of the AP_MLD 101 and the non-AP_MLD 102 may support a legacy standard defined before the 11be standard. More specifically, each of the AP_MLD 101 and the non-AP_MLD 102 may support at least one of the IEEE 802. 1 1a/b/g/n/ac/ax standards. Furthermore, in addition to the IEEE 802.11 series standards, each of the AP_MLD 101 and the non-AP_MLD 102 may support another communication standard such as Bluetooth^{®}, NFC, UWB, ZigBee, or MBOA. Note that UWB is an abbreviation for Ultra Wide Band, and MBOA is an abbreviation for Multi Band OFDM Alliance. NFC is an abbreviation for Near Field Communication. UWB includes wireless USB, wireless 1394, WiNET, and the like. In addition, each of the AP_MLD 101 and the non-AP_MLD 102 may support a communication standard of wired communication such as a wired LAN.

Practical examples of the AP_MLD 101 are a wireless LAN router, a Personal Computer (PC), and the like, but are not limited to them. The AP_MLD 101 may be an information processing apparatus such as a radio chip that can execute wireless communication complying with the 11be standard. Practical examples of the non-AP_MLD 102 are a camera, a tablet, a smartphone, a PC, a mobile phone, a video camera, a headset, and the like, but are not limited to them. The non-AP_MLD 102 may be an information processing apparatus such as a radio chip that can execute wireless communication complying with the 11be standard.

The AP_MLD 101 and the non-AP_MLD 102 can establish links via a plurality of frequency channels, thereby executing multilink communication complying with the 1 1be standard. An AP that executes multilink communication is also referred to as an AP_MLD.

In the IEEE 802.11 series standards, the bandwidth of each frequency channel is defined as 20 MHz. For example, a plurality of frequency channels are defined in, for example, the 2.4-GHz band, the 5-GHz band, the 6-GHz band, and the 60-GHz band, respectively. Note that a bandwidth of 40 MHz or more can be used in one frequency channel by bonding adjacent frequency channels.

For example, the AP_MLD 101 can establish a link 103 with the non-AP_MLD 102 via the first frequency channel in the 5-GHz band to execute communication. Along with this, the AP_MLD 101 can establish a link 104 with the non-AP_MLD 102 via the second frequency channel in the 6-GHz band to execute communication. In this case, the non-AP_MLD 102 executes multilink communication to maintain the link 103 and the link 104. Thus, by establishing the links with the non-AP_MLD 102 via the multiple frequency channels, the AP_MLD 101 can improve the throughput in communication with the non-AP_MLD 102.

Note that in multilink communication, a plurality of links in different frequency bands may be established, or a plurality of links may be established via a plurality of different channels included in the same frequency band. For example, in addition to the link 103 in the 5-GHz band and the link 104 in the 6-GHz band, the AP_MLD 101 and the non-AP_MLD 102 may establish the third link in the 2.4-GHz band. Alternatively, the AP _MLD 101 and the non-AP_MLD 102 may establish the first link via channel 15 (i.e., a first channel) in the 6-GHz band, and additionally establish the second link via channel 207 (i.e., a second channel different from the first channel) in the 6-GHz band.

Further, links of the same frequency band and links of different frequency bands may be mixed. For example, the AP_MLD 101 and the non-AP_MLD 102 may establish the link 103 via channel 36 in the 5-GHz band, and additionally establish a link via channel 149 in the 5-GHz band and a link via channel 15 in the 6-GHz band. If the AP _MLD 101 and the non-AP_MLD 102 establish the plurality of wireless links of different frequencies, even if the band of one link is congested, they can execute communication in the other link. Accordingly, a degradation of throughput in communication and a communication delay can be prevented.

Note that a link ID is assigned to each link for each network in which the links are created. For example, assume a case in which the AP_MLD 101 creates a plurality of networks of different frequency bands. Letting the link 103 be a link in the 5-GHz band established by the non-AP_MLD 102 with the AP_MLD 101, a common link ID = 1 is assigned to this link. Similarly, letting the link 104 be a link in the 6-GHz band established by the non-AP_MLD 102 with the AP_MLD 101, a common link ID = 2 is assigned to this link. The value is merely an example, and another value may be assigned to each link. The link ID may be assigned for each created link or each non-AP_MLD (STA).

Note that in this embodiment, the AP _MLD 101 has constraints on the hardware, and the AP_MLD 101 is assumed to be an NSTR_mobile _AP_MLD. In addition, the link pair corresponding to link 103 and the link 104 is a Non-Simultaneous Transmission Reception (NSTR) link pair which operates in an NSTR operation. That is, data transmission in the link 103 and data reception in the link 104 cannot be simultaneously performed. In addition, predetermined types of radio frames such as a Beacon frame, a Probe_Response frame, and a group designation data frame are transmitted only in a primary link complying with the IEEE 802.11 standard series. Here, the name of the link is not limited to the primary link, and any name can be used as long as the link is used to transmit the above-described frames and complies with the IEEE 802.11 standard series. In addition, in data transmission, data transmission in a non-primary link can be performed only at a timing capable of data transmission in the primary link. Therefore, if data transmission is possible also in the non-primary link, data transmission operations are performed in both the links (i.e., primary link and non-primary link). If data transmission is not possible in the non-primary link, data transmission is performed only in the primary link.

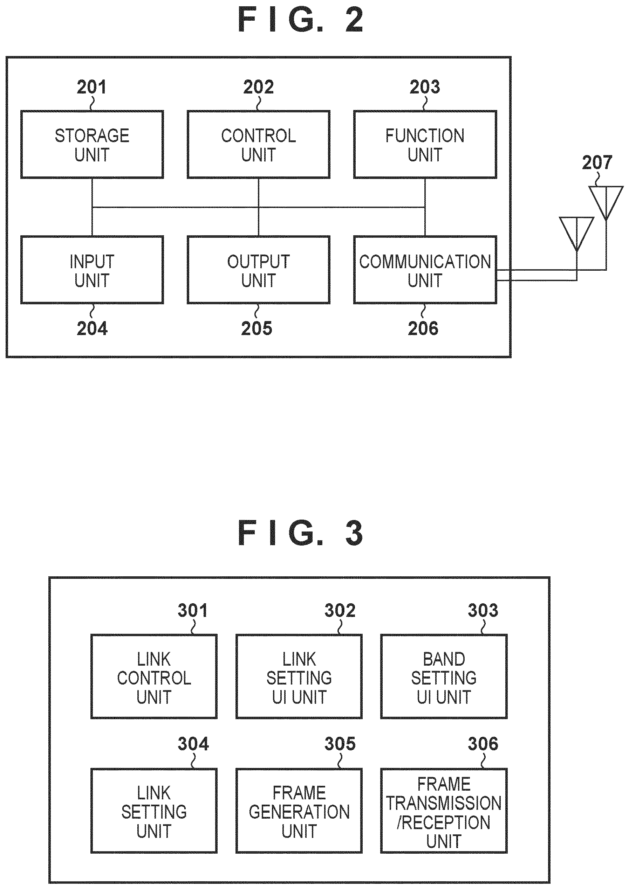

Fig. 2 is a block diagram showing the hardware arrangement of each of the AP_MLD 101 and the non-AP_MLD 102. Note that the non-AP_MLD 102 has the hardware arrangement similar to that of the AP_MLD 101, so that only the hardware arrangement of the AP_MLD 101 will be described below.

The AP_MLD 101 includes a storage unit 201, a control unit 202, a function unit 203, an input unit 204, an output unit 205, a communication unit 206, and an antenna 207. Note that a plurality of antennas may be included.

The storage unit 201 is formed by one or more memories such as a ROM and a RAM, and stores computer programs configured to perform various kinds of operations to be described later and various kinds of information such as communication parameters for wireless communication. ROM is an abbreviation for Read Only Memory, and RAM is an abbreviation for Random Access Memory. Note that as the storage unit 201, not only a memory such as a ROM or a RAM but also a storage medium such as a flexible disk, a hard disk, an optical disk, a magnetooptical disk, a CD-ROM, a CD-R, a magnetic tape, a nonvolatile memory card, or a DVD may be used. The storage unit 201 may include a plurality of memories.

The control unit 202 is formed by, for example, one or more processors such as a CPU and an MPU, and executes computer programs stored in the storage unit 201, thereby controlling the whole AP_MLD 101. Note that the control unit 202 may control the whole AP_MLD 101 by cooperation of the computer programs stored in the storage unit 201 and an Operating System (OS). The control unit 202 generates data and signals (radio frames) to be transmitted in communication with another communication apparatus. Note that CPU is an abbreviation for Central Processing Unit, and MPU is an abbreviation for Micro Processing Unit. The control unit 202 may include a plurality of processors such as a multi-core processor, and control the whole AP_MLD 101 by the plurality of processors.

Furthermore, the control unit 202 controls the function unit 203 and executes wireless communication and predetermined processing such as image capturing, printing, or projection. The function unit 203 is hardware for the AP_MLD 101 to execute predetermined processing.

The input unit 204 accepts various kinds of operations from the user. The output unit 205 performs various kinds of outputs to the user via a monitor screen and a loudspeaker. Here, the output by the output unit 205 may include display on the monitor screen, audio output by the loudspeaker, and vibration output. Note that both the input unit 204 and the output unit 205 may be implemented by one module, like a touch panel. Note that each of the input unit 204 and the output unit 205 may be arranged separately, or integrally with the AP_MLD 101.

The communication unit 206 controls wireless communication complying with the 11be standard. The communication unit 206 may control wireless communication complying with another IEEE 802.11 series standard in addition to the 11be standard, and control wired communication such as a wired LAN. The communication unit 206 controls the antenna 207, and transmits/receives signals for wireless communication, which have been generated by the control unit 202.

Note that if the AP_MLD 101 supports the NFC standard or Bluetooth standard in addition to the 11be standard, the communication unit 206 may control wireless communication complying with these communication standards. If the AP_MLD 101 can execute wireless communication complying with each of a plurality of communication standards, it may include the communication unit and the antenna supporting each communication standard.

The AP_MLD 101 communicates data such as image data, document data, or video data with the non-AP_MLD 102 via the communication unit 206. Note that the antenna 207 may be arranged separately from the communication unit 206 or may be configured as a module integrated with the communication unit 206.

The antenna 207 is an antenna that allows communication (transmission/reception) in the 2.4-GHz band, 5-GHz band, and 6-GHz band. The AP_MLD 101 includes two antennas in this embodiment but may include three antennas. Alternatively, the AP _MLD 101 may include antennas different for the respective frequency bands. If the AP_MLD 101 includes a plurality of antennas, it may include the communication unit 206 corresponding to each antenna.

Fig. 3 is a block diagram showing the functional arrangement of each of the AP _MLD 101 and the non-AP_MLD 102. Note that the non-AP_MLD 102 has the functional arrangement similar to that of the AP_MLD 101, so that only the functional arrangement of the AP_MLD 101 will be described below. However, the AP_MLD 101 is different from the non-AP_MLD 102 in that the AP_MLD 101 has a function of creating a network and the non-AP_MLD 102 has a function of participating in the network.

The AP_MLD 101 includes a link control unit 301, a link setting UI unit 302, a band setting UI unit 303, a link setting unit 304, a frame generating unit 305, and a frame transmission/reception unit 306.

The link control unit 301 is a block that controls one or more links used by the AP _MLD 101 for wireless communication with the non-AP_MLD 102. More specifically, the link control unit 301 controls a communication start process for establishing links, a link addition/deletion process after starting communication, and a communication end process of deleting all links. The connection process is formed from, more specifically, an Authentication process, an Association process, and a 4-Way-Hand-Shake (4WHS) process.

The link setting User Interface (UI) unit 302 is a block that provides a UI for a user inputting settings of multilink communication of the AP_MLD 101. For example, the link setting UI unit 302 provides access to the AP_MLD 101 using a Web browser. The link setting UI unit 302 is used to set enabling/disabling of multilink communication, set the channel of each link, set the Beacon Interval (BI) value used in common for all links, and the like.

The band setting UI unit 303 is a block that provides a UI for setting communication of the AP in each frequency band without performing multilink communication. For example, if it is desired to independently operate the AP in each frequency band, the band setting UI unit 303 is used to set the channel of the AP in each frequency band, set the BI value, and the like.

The link setting unit 304 selects and determines the primary link in multilink communication set by the link setting UI unit 302. The link setting unit 304 also notifies the frame transmission/reception unit 306 of the primary link.

The frame generating unit 305 is a block that generates a frame to be transmitted in accordance with the primary link set by the link setting unit 304.

The frame transmission/reception unit 306 transmits the radio frame generated by the frame generating unit 305 and receives a radio frame from a partner apparatus in accordance with the primary link information received from the link setting unit 304. The radio frames include a Beacon frame, a Probe_Response frame, a data frame, and the like.

### <Operation of Apparatus>

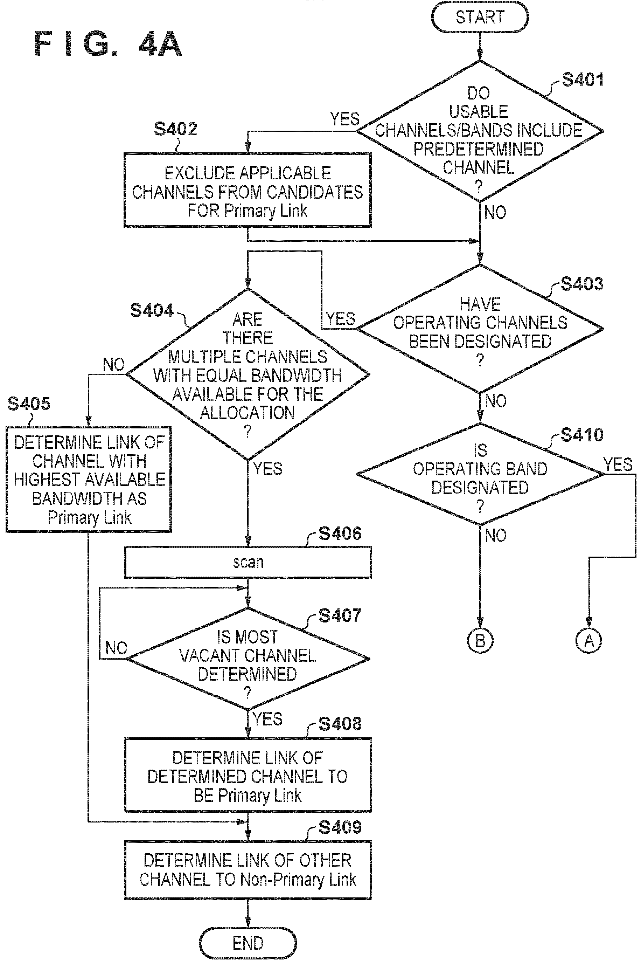

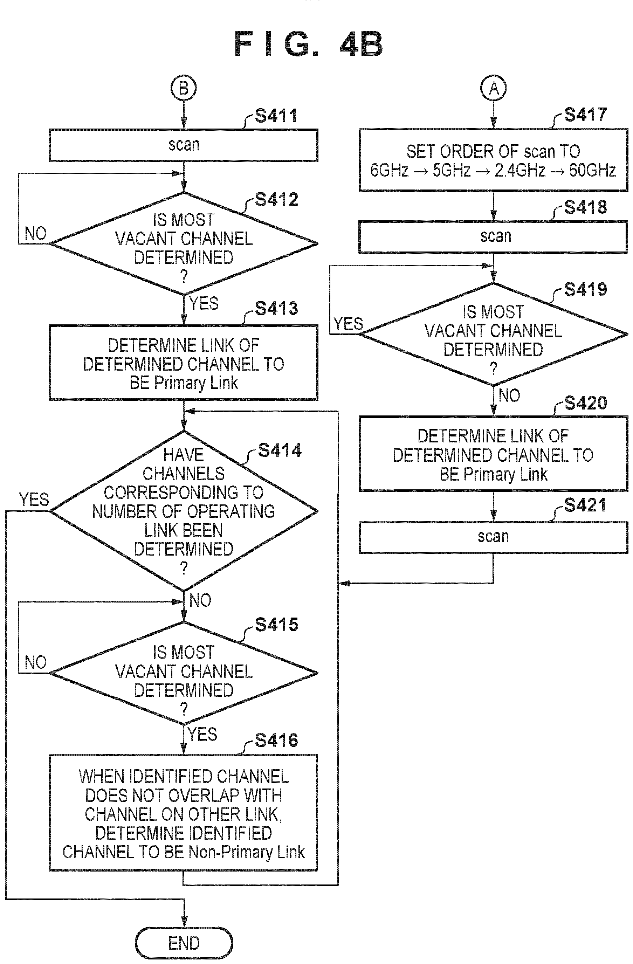

Figs. 4A and 4B are a flowchart of a primary link determination process. Here, a process of determining the primary link upon activating the operation of the AP_MLD 101 as the AP will be described. This process is started when the function as the AP is started, for example, when the AP_MLD 101 is turned on, when an instruction to start the AP operation of the AP_MLD 101 is received, or when the wireless function is turned on. Alternatively, the process may be started if it is desired to determine the primary link again due to deterioration of the radio wave environment after operating as the AP. Note that the frequency bands and channels used for the AP operation are designated by the user in advance, and stored in, for example, the storage unit 201.

In step S401, the AP_MLD 101 checks whether the frequency bands and channels used for the AP operation include the frequency band(s) and channel(s) in the frequency band that require a DFS operation or an AFC operation. If YES in step S401, the process advances to step S402; otherwise, the process advances to step S403.

DFS is an abbreviation for Dynamic Frequency Selection. The DFS is a function of, when using a frequency in the 5-GHz band which is used by a meteorological radar and an aircraft radar, refraining from using a radio wave in this frequency band for 30 minutes after the radar is detected. AFC is an abbreviation for Automated Frequency Coordination. In the AFC, when using a frequency in the 6-GHz band which is used for industrial use, the usable frequencies and the output power change depending on the location where the radio wave is used. By inputting location information to the AFC system, the information about the frequency to be used and the radio wave output to be restricted can be obtained.

In step S402, among the frequency bands and channels used for the AP operation, the AP_MLD 101 excludes, from candidates for the primary link, the frequency band(s) and channel(s) which require the DFS operation or the AFC operation. However, configuration may be such that if all of the frequency bands and channels used for the AP operation are included in the frequency bands and channels which require the DFS operation or the AFC operation, they are not to be excluded from the candidates.

That is, as has been described above, in the 5-GHz band and the 6-GHz band, special processing needs to be performed on the frequency, and in some cases, the operating frequency needs to be switched. If the frequency band in use changes, the throughput may be degraded and a delay may occur in communication with the partner apparatus. Therefore, the frequency bands and channels which require the DFS operation or AFC operation are excluded from the candidates for the primary link.

In step S403, the AP_MLD 101 checks whether the channels (ch) for the AP operation have been designated. For example, if "channel 1 in the 2.4-GHz band" and "channel 36 in the 5-GHz band" have been designated as the channels for the AP operation, it is determined to be YES, and the process advances to step S404. If no channel has been designated or only the frequency band (5-GHz band or the like) has been designated, it is determined to be NO, and the process advances to step S410.

In step S404, the AP_MLD 101 checks the bandwidths available to ensure communication in the designated channels, and determines whether the bandwidths are equal. For example, if the AP_MLD 101 can operate using only the 20-MHz bandwidth in a link 1 but can operate using the 160-MHz bandwidth in a link 2, it is determined to be NO, and the process advances to step S405. If the AP_MLD 101 can execute communication using the 80-MHz bandwidth in both the link 1 and the link 2, it is determined to be YES, and the process advances to step S406.

In step S405, if the bandwidth used for communication changes between the links, the AP_MLD 101 selects, as the primary link, the channel that can ensure the relatively wide band. For example, if the AP_MLD 101 operates using the 20-MHz bandwidth in the link 1 but using the 160-MHz bandwidth in the link 2, the link 2 is determined as the primary link.

As has been described above, there is a constraint that, in data transmission in the NSTR operation, data transmission in a non-primary link can be performed only at a timing capable of data transmission in the primary link. Hence, the link in the frequency band with the wide bandwidth, which is likely to provide more data transmission opportunities, is set as the primary link. With this, it is possible to improve the throughput and suppress a delay in data transmission and reception.

In step S406, the AP_MLD 101 executes a scan operation to check the surrounding radio wave environment. In step S407, the AP_MLD 101 checks, based on the result of the scan operation in step S406, whether the link operating using the candidate channel for the primary link is more vacant than other candidate channels. The vacancy of the radio wave environment is determined, for example, based on the following conditions:
- The number of times Beacon and Probe_Response frames are detected: This is because, the fewer the surrounding APs operating in the same channel, the more vacant the channel can be. In addition to the above-described frames, control frames such as Probe _Request, Authentication, Association_Request, Association_Response, and Action frames may be checked.
- Information obtained from the surrounding STAs and APs: For example, a Beacon Report and a Reduced Neighbor Report (RNR) are requested and obtained from the STAs and APs.
- Use status of the frequency channel (transmission status by the STA and the AP) in a predetermined time: The rate at which transmission opportunities (TXOP) are ensured or the number of carrier senses occurring per unit time is measured.

In step S408, the AP_MLD 101 determines the link of the most vacant candidate channel as the primary link. In step S409, the AP_MLD 101 determines the link of the other candidate channel, which is not selected as the primary link, as the non-primary link.

Note that if some of the set channels can perform a Simultaneous Transmission Response (STR) operation, a set of channels that can operate only in the NSTR operation are determined as the primary link and the non-primary link. Thus, the links that can perform the STR operation are not considered. For example, assume a case in which the AP_MLD 101 is designated to operate in "channel 1 in the 2.4-GHz band", "channel 36 in the 5-GHz band", and "channel 1 in the 6-GHz band", and "channel 1 in the 2.4-GHz band" and the other channel ("channel 36 in the 5-GHz band" or "channel 1 in the 6-GHz band") can perform the STR operation. On the other hand, assume that a pair of "channel 36 in the 5-GHz band" and "channel 1 in the 6-GHz band" perform the NSTR operation. In this case, the process described here is executed only on the pair of "channel 36 in the 5-GHz band" and "channel 1 in the 6-GHz band". That is, "channel 1 in the 2.4-GHz band" can solely operate as the primary link.

In step S410, the AP_MLD 101 checks whether the frequency band has been designated. For example, if it is defined that the 5-GHz band and the 6-GHz band are used for multilink communication, it is determined to be YES, and the process advances to step S417. If no frequency band has been designated, it is determined to be NO, and the process advances to step S411.

In step S411, the AP_MLD 101 executes a scan operation regardless of the frequency band. Alternatively, assuming that all frequency bands have been designated in step S410, the scan operation may be executed while giving a level of priority for each frequency band.

In step S412, the AP_MLD 101 checks, based on the result of the scan operation in step S411, whether the link operating using the candidate channel for the primary link is more vacant than other candidate channels. The checking method at this time may be similar to that described in step S407. In step S413, the AP_MLD 101 determines the link of the most vacant candidate channel as the primary link.

In step S414, in order to determine whether to perform a process of determining channels used in the remaining links, the AP_MLD 101 checks whether channels corresponding to the links used for the operation have been determined. If the channels have not been determined, the process advances to step S415. If the channels have been determined, the process ends.

In step S415, the AP_MLD 101 determines the most vacant channel based on the result of the scan operation. The checking method may be similar to that described in step S407.

In step S416, the AP_MLD 101 determines the most vacant channel as the channel of the next remaining link. Note that a channel which does not overlap the channel(s) of the already determined link and the band used by this link, is determined as the channel used in the remaining link.

For example, assume that the vacant channel in step S415 is "channel 36 in the 5-GHz band", and channel 36 uses the 80-MHz bandwidth. In this case, even if the second vacant channel is "channel 40 in the 5-GHz band", since the bandwidth used by channel 40 overlaps the bandwidth used by channel 36, channel 40 is not selected.

Alternatively, the channel of the non-primary link selected here may be set such that the operation is performed using the channel whose frequency is as far away as possible from the frequency of the channel of the primary link. For example, in a case of using the primary link with "channel 36 in the 5-GHz band", and if "channel 1 in the 2.4-GHz band" is farthest therefrom among the frequencies supported by the self-apparatus, "channel 1 in the 2.4-GHz band" may be selected as the channel in the non-primary link.

Steps S414 to S416 described above are repeated until the number of channels corresponding the number of links used for the AP operation by the AP_MLD 101 itself are determined. Note that this process may be executed only if there is no choice but to select a combination of links that operate only in the NSTR operation. For example, if "channel 1 in the 2.4-GHz band" and "channel 36 in the 5-GHz band" can operate in the STR operation, and a combination of the 2.4-GHz band and the 5-GHz band has been designated for the operation, this process may not be executed. If any channels are selected from the 5-GHz band and the 6-GHz band, respectively, and they can operate only in the NSTR operation, this process may be executed only if it is designated to perform the AP operation in the 5-GHz band and the 6-GHz band.

In step S417, the AP_MLD 101 assigns the order of priority (level of priority) in the order of the 6-GHz band, the 5-GHz band, the 2.4-GHz band, and the 60-GHz band. In step S418, the AP_MLD 101 executes a scan operation in the order of priority set in step S417.

For example, if the designated bands include the 6-GHz band, the scan operation is executed while setting the 6-GHz band as the strong candidate for the primary link. If the designated bands do not include the 6-GHz band but include the 5-GHz band, the scan operation is executed in the 5-GHz band. Note that the order of priority of the bands described above is merely an example, and another order may be used.

For example, the frequency band that can ensure a wider bandwidth may be assigned with the higher order of priority. In this case, the order of priority is set in the order of the 60-GHz band, the 6-GHz band, the 5-GHz band, and the 2.4-GHz band. Alternatively, the frequency band which is likely to be supported by more models may be assigned with the higher order of priority. In this case, the order of priority is set in the order of the 2.4-GHz band, the 5-GHz band, the 6-GHz band, and the 60-GHz band. Alternatively, the order of priority may be set while combining the above-described combinations. When the AP_MLD 101 operates as the AP and then the primary link is changed while the non-AP_MLD is connected thereto, the frequency band supported by the non-AP_MLD may be prioritized. The frequency band to be prioritized may be limited to the bandwidth supported by the AP_MLD 101 itself. For example, if the AP_MLD 101 does not support the 60-GHz band, the 60-GHz band may be excluded from the candidates.

In step S419, the AP_MLD 101 checks, based on the result of the scan operation in step S418, whether the link operating using the candidate channel for the primary link is more vacant than other candidate channels. The checking method at this time may be similar to that described in step S407. In step S420, the AP _MLD 101 determines the link of the most vacant candidate channel as the primary link.

In step S421, the AP_MLD 101 executes a scan operation while including the frequency bands not scanned in step S418.

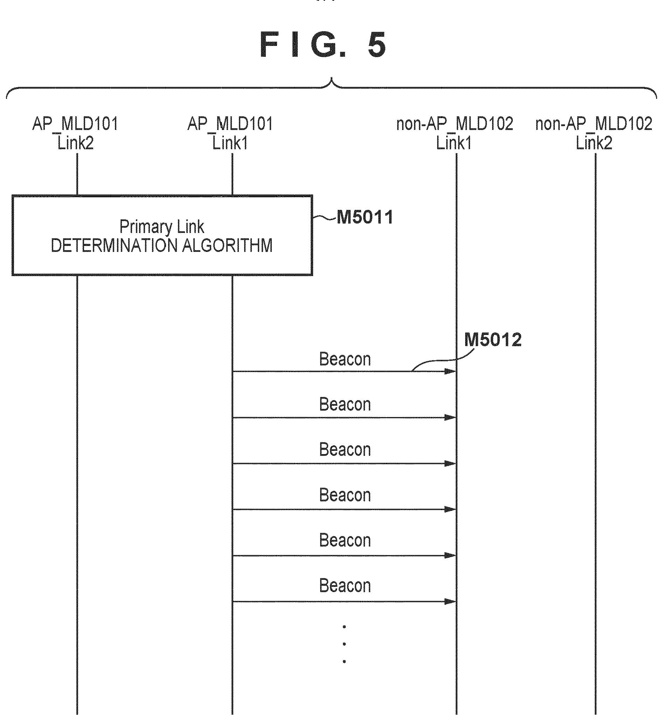

Fig. 5 is a sequence chart between the AP_MLD and the non-AP_MLD (between the AP and the STA) in the first embodiment. More specifically, Fig. 5 shows the sequence from determination of the primary link by the AP_MLD 101 to operation as the AP.

If the primary link is determined by the process illustrated in Figs. 4A and 4B (M5011), the AP_MLD 101 transmits a Beacon from the determined primary link (M5012). The surrounding STAs (including the non-AP_MLD 102) can obtain the following information from the Beacon transmitted by the AP_MLD 101.
- The AP_MLD 101 is an NSTR AP_MLD (NSTR_mobile_AP_MLD).
- The primary link is the link 1.
- The link 2 is operating in another channel.

Note that if the non-AP_MLD (that is, a normal STA) (not shown) not supporting multilink communication receives the Beacon, the non-AP_MLD can recognize only the link 1 among the plurality of wireless links used by the AP_MLD 101, and connect thereto.

As has been described above, according to the first embodiment, the AP_MLD 101 can appropriately select the primary link, and implement more efficient data communication with the non-AP_MLD. Since the Beacon is transmitted in the more appropriate link, there is the secondary effect that the non-AP_MLD before connection can easily find the AP _MLD. Further, since it is unnecessary to often change the frequency, it is expected that communication with the non-AP_MLD is less likely to be interrupted. Accordingly, by determining the primary link in the manner described above, it is expected that more efficient communication can be performed in multilink communication.

### (Second Embodiment)

In the second embodiment, an operation of changing a primary link after an AP_MLD 101 and a non-AP_MLD 102 start multilink communication will be described. Note that the system configuration and the apparatus arrangement are similar to those in the first embodiment (Figs. 1 to 3), so that a description thereof will be omitted.

### <Operation of Apparatus>

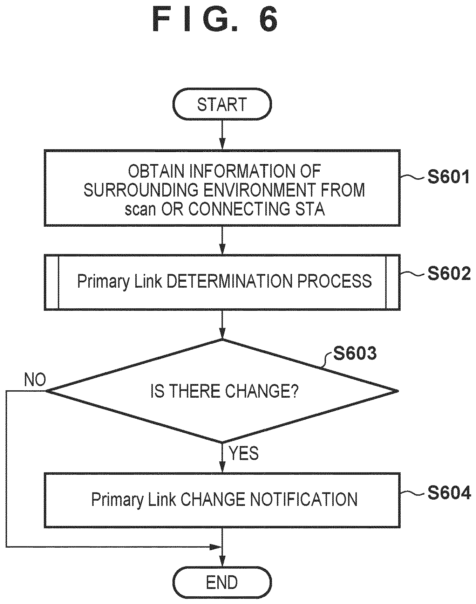

Fig. 6 is a flowchart of a primary link changing process. More specifically, Fig. 6 illustrates a process of, after the non-AP_MLD 102 is connected to the AP_MLD 101, determining the primary link again, and notifying the surrounding apparatus of a change notification, as needed.

This process may be periodically executed after an arbitrary non-AP_MLD is connected to the AP_MLD 101. Alternatively, this process may be executed regardless of connection of the non-AP_MLD. Alternatively, this process may be executed if the communication throughput or a delay becomes below or above a threshold value during communication with the non-AP_MLD. In addition to the above-described examples, this process may be started if the connected non-AP_MLD reports on the more vacant channel. Before the non-AP_MLD is connected, the primary link may be determined by focusing on the connectivity, and after the connection, this process may be executed to move the primary link to the channel with high communication efficiency after checking the frequency supported by the opposite non-AP_MLD.

In step S601, the AP_MLD 101 executes a scan operation to check the surrounding radio wave status during communication or periodically. Alternatively, a report on the current radio wave status may be received from the connected non-AP_MLD or the surrounding non-AP _MLD (STA). The report to be received at this time may be a Beacon Report or RNR.

In step S602, the AP_MLD 101 executes the primary link determination process based on the information obtained in step S601. The process of determining the primary link at this time can be a process similar to the method described with reference to Figs. 4A and 4B. Note that the process may be executed while changing the level of priority for the frequency band and channel to be used.

Further, the frequency supporting information of the non-AP_MLD currently connected to the AP_MLD 101 and the connection status to the non-primary link may additionally be considered. For example, when activating the AP, the connectivity may be focused on and the 2.4-GHz band may be prioritized as the primary link. On the other hand, after the non-AP_MLD 102 is connected, if it can be determined that the connected non-AP_MLD supports the 6-GHz band, the primary link may be selected from the 6-GHz band at that point in time.

Alternatively, if the connected non-AP_MLD supports the 2.4-GHz band and the 5-GHz band alone, the candidates for changing the primary link may be limited to the 2.4-GHz band and the 5-GHz band alone. This may be executed by checking the information of the Operating Class obtained at the time of connection with the non-AP_MLD.

For example, assume a situation in which the AP_MLD 101 operates in "channel 1 in the 2.4-GHz band", "channel 36 in the 5-GHz band", and "channel 1 in the 6-GHz band". If the connected non-AP_MLD uses "channel 1 in the 2.4-GHz band" and "channel 36 in the 5-GHz band", these two channels may be regarded as the candidates for the primary link. That is, the primary link is selected from the channels actually used by the connected non-AP_MLD. This has a merit that the non-AP_MLD can easily follow a change of the primary link.

In step S603, the AP_MLD 101 checks, based on the result of the primary link determination process, whether the primary link is changed. If the primary link is not changed, the process ends. If the primary link is changed, the process advances to step S604.

In step S604, the AP_MLD 101 notifies the surrounding apparatuses that the primary link is changed. This notification may use a Channel_Switching_Announcement frame.

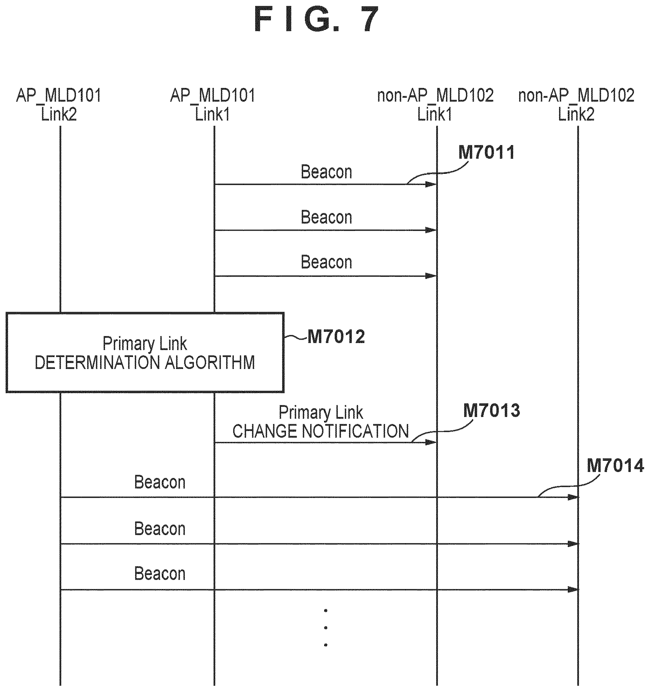

Fig. 7 is a sequence chart between the AP and the STA in the second embodiment. That is, more specifically, Fig. 7 shows a sequence chart in a case in which the AP_MLD 101 and the non-AP_MLD 102 change the primary link after connection.

The AP_MLD 101 first operates using a link 1 as the primary link (M701 1). That is, a Beacon is transmitted via a channel in the link 1. After a predetermined time has elapsed, a primary link determination algorithm is executed by using review of the primary link as a trigger (M7012). This process may be similar to that illustrate in Figs. 4A and 4B. Here, it is assumed that the primary link is changed to a link 2.

Then, the AP_MLD 101 transmits a primary link change notification to the connected non-AP_MLD 102 (M7013). Here, the change notification is transmitted via a channel in the link 1 before the change. After transmitting the change notification, the AP_MLD 101 changes the primary link from the link 1 to the link 2 (M7014). That is, the Beacon is transmitted via a channel in the link 2.

If the primary link change notification is received, the non-AP_MLD 102 needs to change the primary link. That is, after the change notification is received, the non-AP_MLD 102 also needs to use the link 2 as the primary link as the criterion for data transmission. After changing the primary link to the link 2, the non-AP_MLD 102 receives the Beacon from the AP _MLD 101.

As has been described above, according to the second embodiment, the primary link is changed in accordance with the purpose and environment. With this, the AP_MLD 101 and the non-AP_MLD 102 can further improve the data transmission efficiency. In addition, it is possible to obtain effects advantageous in terms of communication throughput and a decrease in delay while maintaining the high connectivity.

### (Modification)

In addition to the embodiments described above, the primary link may be notified, for example, when the primary link is determined for the first time, or when the non-AP_MLD is connected for the first time. This notification may be indicated using a Multi-Link_Element. The primary link change notification may be notified using an Action frame which is newly defined. At this time, the above-described Multi-Link_Element may be used.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. A communication apparatus (101) capable of multilink communication complying with IEEE 802.11 standard series, comprising
determination means (202) for determining, from a plurality of wireless links (103, 104) established with another communication apparatus (102), a primary link complying with the IEEE 802.11 standard series, which is a link capable of transmission of a predetermined type of a radio frame,
wherein the determination means determines the primary link based on at least one of a first condition concerning a plurality of frequency channels corresponding to the plurality of wireless links, and a second condition concerning a radio wave status in each of the plurality of wireless links.

2. The apparatus according to claim 1, wherein
the first condition includes at least one of that the frequency channel corresponding to the primary link is a frequency channel in a frequency band which does not require Dynamic Frequency Selection (DFS), and that a frequency band corresponding to the primary link is a frequency channel in a frequency band which does not require Automated Frequency Coordination (AFC).

3. The apparatus according to claim 1 or claim 2, wherein
the first condition includes that a link corresponding to one frequency channel, among the plurality of frequency channels, whose bandwidth is relatively wide is determined as the primary link.

4. The apparatus according to any of claims 1 to 3, wherein
each of the plurality of frequency channels is included in any one of a plurality of frequency bands,
a level of priority is assigned to each of the plurality of frequency bands, and
the first condition includes that a link corresponding to one frequency channel, among the plurality of frequency channels, included in a frequency band having a relatively high level of priority is determined as the primary link.

5. The apparatus according to any of claims 1 to 4, wherein
the second condition includes that a link, in which the number of times a Beacon is detected is relatively small among the plurality of wireless links, is determined as the primary link.

6. The apparatus according to claim 1, further comprising
notification means for notifying the other communication apparatus of information about the primary link determined by the determination means.

7. The apparatus according to claim 6, further comprising
control means for controlling the determination means so as to determine the primary link at a predetermined timing,
wherein, if the primary link is changed by the determination means, the notification means notifies the other communication apparatus of information about the primary link newly determined by the determination means.

8. The apparatus according to any one of claims 1 to 7, wherein
the multilink communication is multilink communication including a Non-Simultaneous Transmission Reception (NSTR) link pair complying with an IEEE 802.11be standard, and
the predetermined type of the radio frame includes a Beacon frame and a Probe_Response frame.

9. A control method of a communication apparatus (101) capable of multilink communication complying with IEEE 802.11 standard series, comprising
a determination step (Fig. 4) of determining, from a plurality of wireless links established with another communication apparatus, a primary link complying with the IEEE 802.11 standard series, which is a link capable of transmission of a predetermined type of a radio frame,
wherein in the determination step, the primary link is determined based on at least one of a first condition concerning a plurality of frequency channels corresponding to the plurality of wireless links, and a second condition concerning a radio wave status in each of the plurality of wireless links.

10. A program for causing a computer, which includes a communication unit configured to perform wireless communication, to execute a control method defined in claim 9.

11. A computer-readable storage medium having stored thereon the program of claim 10.
